# FASCICULE DE BREVET EUROPEEN

(11) **EP 3 987 309 B1**
(45) Date de publication et mention de la délivrance du brevet: **08.01.2025**
(21) Numéro de dépôt: 20731500.3
(22) Date de dépôt: 12.06.2020
(51) Int. Cl.: G01S 13/937, G01S 13/86, G01S 13/933, G01S 7/22, G01S 7/24

(54) **PROCÉDÉ DE SURVEILLANCE DE L'ENVIRONNEMENT D'UN VÉHICULE**
VERFAHREN ZUR ÜBERWACHUNG DER UMGEBUNG EINES FAHRZEUGS
METHOD FOR MONITORING THE SURROUNDINGS OF A VEHICLE

(30) Priorité: 20.06.2019 FR 1906656
(43) Date de publication de la demande: 27.04.2022
(73) Titulaire: Safran Electronics & Defense, 75015 Paris (FR)
(72) Inventeur: OLLAGNIER, Cédric, 75015 Paris (FR); OLLAGNIER, Isabelle, 75015 Paris (FR)
(74) Mandataire: Cabinet Boettcher
(86) Numéro de dépôt international: PCT/EP2020/066412
(87) Numéro de publication internationale: WO 2020/254216

(56) Documents cités:
- WO-A2-2006/035305
- JP-A- S63 108 288
- US-A1- 2011 063 163
- US-A1- 2014 306 997
- US-B1- 6 522 289

## Description

### ARRIERE PLAN DE L'INVENTION

La présente invention concerne le domaine de la prévention des collisions avec des mobiles et plus particulièrement entre véhicules.

Traditionnellement, dans le domaine maritime, on montait sur les navires un taximètre (« pelorus » en anglais) comportant une alidade de visée qu'il est possible de pointer sur un mobile pour vérifier l'évolution du gisement de ce mobile : une absence d'évolution du gisement du mobile révélait un risque de collision.

Les navires sont désormais équipés de moyens automatiques de surveillance de leur environnement, moyens qui comprennent un radar, un système radio d'identification automatique (ou AIS pour « Automated Identification System ») et un dispositif de veille optique.

Le document US-A-2014/0306997, par exemple, décrit un procédé de surveillance radar de l'environnement d'un véhicule pourvu d'un radar. La position des objets environnants est classiquement pointée par un symbole placé sur une représentation polaire dont le centre est occupé par un symbole représentant le véhicule pourvu du radar. Il est prévu d'associer à chaque symbole d'objet environnant un symbole AIS.

La plupart des radars sont équipés d'un logiciel de traitement des échos permettant de calculer le gisement et la distance du mobile par rapport au véhicule porteur, la vitesse du mobile et un point de croisement le plus proche (ou CPA pour « Closest point of approach ») utilisé pour déterminer le risque de collision. Néanmoins, le calcul du point de croisement le plus proche est basé sur l'hypothèse que le mobile se déplace en ligne droite à la vitesse calculée, hypothèse qui peut être erronée.

### OBJET DE L'INVENTION

L'invention a notamment pour but d'améliorer la prévention des collisions.

### RESUME DE L'INVENTION

A cet effet, on prévoit un procédé de surveillance d'une région dans laquelle se trouve un porteur, comprenant les étapes de :
- détecter, au moyen d'au moins un capteur de premier type, des positions successives d'un mobile suivant une trajectoire dans ladite région ;
- afficher une représentation polaire ayant un centre symbolisant la position actuelle du porteur et y placer un premier symbole de mobile représentant une position actuelle du mobile en fonction d'un angle de gisement et d'une distance du mobile par rapport au porteur.

Selon l'invention, le procédé comprend les étapes de :
- afficher autour de la représentation polaire une bande annulaire dont la largeur représente une durée de surveillance prédéterminée ;
- placer dans la bande annulaire des deuxièmes symboles de mobile représentant des données angulaires d'une trajectoire du mobile, , la bande annulaire et la représentation polaire ayant une même référence angulaire, la bande annulaire ayant un pourtour intérieur correspondant à un temps récent et un pourtour extérieur correspondant à un temps passé par rapport au temps récent d'une durée égale à la durée de surveillance prédéterminée et les deuxièmes symboles de mobile étant placés d'autant plus près du pourtour extérieur de la bande annulaire que la donnée angulaire correspondante est ancienne.

La donnée angulaire de trajectoire est un angle de gisement du mobile par rapport au porteur ou un azimut du mobile. Ainsi, la représentation polaire permet de visualiser les positions relatives des mobiles et du porteur à une échelle spatiale tandis que la bande annulaire fournit une échelle temporelle permettant de visualiser la direction relative au porteur suivie par les mobiles et donc d'apprécier les risques de collision que font courir ces mobiles au porteur.

L'invention concerne également un procédé ci-dessus dans lequel des symboles de porteur représentant les positions successives du porteur pendant la durée de surveillance prédéterminée sont placés dans la bande annulaire pour mettre en évidence une variation d'azimut du porteur pendant la durée de surveillance prédéterminée, les symboles de porteur étant placés d'autant plus près du pourtour extérieur de la bande annulaire que la position correspondante est ancienne.

Selon un autre mode de réalisation, la position du mobile est également détectée par au moins un capteur de deuxième type, le capteur de premier type déterminant la position du mobile dans un premier repère et le capteur de deuxième type déterminant la position du mobile dans un deuxième repère, le procédé comprenant l'étape de normaliser le premier repère et le deuxième repère, la position du mobile utilisée pour positionner le premier symbole de mobile et le deuxième symbole de mobile résultant d'une combinaison des positions détectées par les deux capteurs.

L'invention concerne en outre un dispositif de surveillance d'une région dans laquelle se trouve un porteur du dispositif, comprenant une unité informatique de traitement de données qui est reliée à un afficheur et à un bus de données transportant des données positionnelles de mobiles se trouvant dans la région du porteur, l'unité informatique de traitement étant programmée pour mettre en œuvre le procédé de l'invention.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :

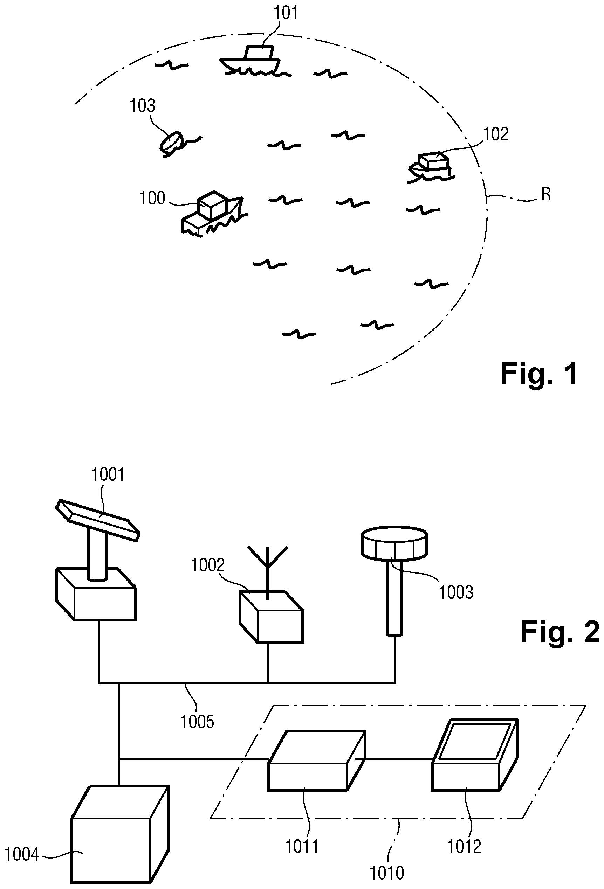

La figure 1 est une vue schématique en perspective d'un navire pourvu d'un dispositif permettant la mise en œuvre de l'invention ;
La figure 2 est une vue schématique en perspective montrant ce dispositif ;
La figure 3 est une vue montrant l'afficheur de ce dispositif et l'affichage conforme à l'invention.

### DESCRIPTION DETAILLEE DE L'INVENTION

En référence aux figures, l'invention est ici décrite en application à un navire ou porteur 100 évoluant dans une région R dans laquelle se trouvent également des mobiles 101, 102, 103 qui sont ici d'autres navires.

Le porteur 100 est pourvu d'au moins un capteur de premier type, un capteur de deuxième type et un capteur de troisième type qui sont agencés pour déterminer la position des mobiles respectivement dans un premier repère, un deuxième repère et un troisième repère. Plus précisément, le porteur 100 est pourvu d'un capteur radar 1001, d'un capteur AIS 1002 et d'un capteur optique 1003 qui sont reliés à une unité de commande 1004 du porteur 100 par un bus de données 1005 de type NMEA pour transmettre à l'unité de commande 1004 des données positionnelles des mobiles 101, 102, 103. Les capteurs 1001, 1002, 1003 sont agencés et commandés pour détecter des positions successives des mobiles 101, 102, 103 dans la région R et fournir les données positionnelles correspondantes. Ces capteurs sont connus en eux-mêmes. On rappellera simplement que le système radar comprend un émetteur de signaux radar incident et un capteur de signaux réfléchis permettant de mesurer dans un repère polaire un gisement du mobile (orientation de l'antenne), une distance du mobile (temps de vol) et une vitesse du mobile (effet Doppler) ; le capteur AIS capte des signaux radiofréquence qui sont envoyés par les mobiles et qui contiennent une identification du mobile, sa position déclarée et la route suivie dans un repère géographique ; le capteur optique comprend une ou plusieurs caméras opérant dans le domaine visible et éventuellement infrarouge et permettant de mesurer un gisement des mobiles dans un repère polaire. Le capteur radar 1001 et le capteur AIS 1002 permettent à l'unité de commande de calculer un point de croisement le plus proche (CPA).

Le porteur 100 est également pourvu d'un dispositif 1010 de surveillance de la région R dans laquelle se trouve le porteur 100. Le dispositif 1010 comprend une unité informatique 1011 de traitement de données qui est reliée à un afficheur 1012 et au bus de données 1005. L'unité informatique 1011 comprend de façon connue en elle-même un processeur et une mémoire contenant des programmes comportant des instructions pour la mise en œuvre du procédé selon l'invention.

L'unité informatique 1011 exécute les étapes de :
- récupérer les données positionnelles transmises sur le bus de données 1005,
- normaliser le premier repère, le deuxième repère et le troisième repère, et calculer une position consolidée de chaque mobile 101, 102, 103 en combinant les positions détectées par les trois capteurs 1001, 1002, 1003 pour chacun des mobiles 101, 102, 103 ;
- déterminer un défilement des mobiles 101, 102, 103 par rapport au porteur 100 ;
- afficher, sur l'afficheur 1012, une représentation polaire 10 ayant un centre symbolisant la position actuelle du porteur 100 ;
- placer dans la représentation polaire 10 des premiers symboles de mobile 1, 2, 3 représentant la position actuelle consolidée de chacun des mobiles 101, 102, 103 en fonction de l'angle de gisement et de la distance de chacun des mobiles 101, 102, 103 par rapport au porteur 100.

L'unité informatique 1011 exécute les étapes de :
- afficher autour de la représentation polaire 10 une bande annulaire 20 dont la largeur 1 représente une durée de surveillance prédéterminée ;
- placer dans la bande annulaire 20 des deuxièmes symboles de mobile 1', 2', 3' représentant les angles de gisement successifs de chacun des mobiles 101, 102, 103 par rapport au porteur 100 pour mettre en évidence le défilement de chacun desdits mobiles 101, 102, 103 par rapport au porteur 100.

La référence angulaire de la bande annulaire 20 est la même que celle utilisée pour la représentation polaire 10. La durée de surveillance prédéterminée dépend de la vitesse du porteur 100 et de la vitesse des mobiles qui sont susceptibles d'évoluer dans la région. Dans le domaine maritime, la durée de surveillance prédéterminée sera par exemple de 30 minutes, voire 15 minutes. La bande annulaire 20 a un pourtour intérieur 21 correspondant à un temps récent et un pourtour extérieur 22 correspondant à un temps passé par rapport au temps récent d'une durée égale à la durée de surveillance prédéterminée et les deuxièmes symboles de mobile 1', 2', 3' sont placés d'autant plus près du pourtour extérieur 22 de la bande annulaire 20 que l'angle de gisement correspondant est ancien (les angles de gisement plus anciens que la durée de surveillance prédéterminée ne sont plus représentés). Le pourtour intérieur 21 de la bande annulaire 20 est placé à une distance du centre de la représentation polaire 10 correspondant, dans la représentation polaire, à un horizon optique du capteur optique 1003. L'horizon optique est par exemple situé à une distance d'une vingtaine de miles nautiques.

En outre, des symboles de porteur 0' représentant les caps successifs du porteur 100 pendant la durée de surveillance prédéterminée sont placés dans la bande annulaire 20 pour mettre en évidence une variation d'azimut du porteur 100 pendant la durée de surveillance prédéterminée. Les symboles de porteur 0' sont placés d'autant plus près du pourtour extérieur 22 de la bande annulaire 20 que le cap correspondant est ancien (les caps plus anciens que la durée de surveillance prédéterminée ne sont plus représentés).

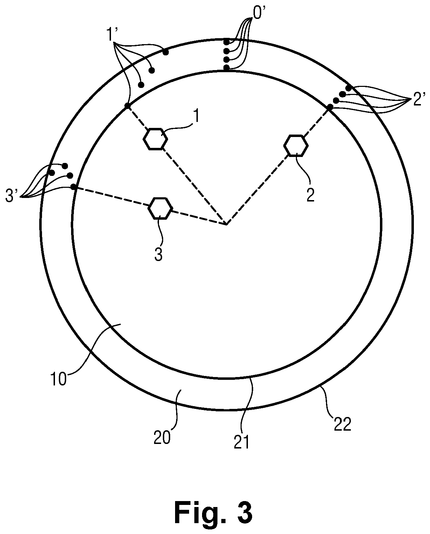

On comprend qu'ainsi il est facile pour un opérateur de détecter les risques de collision. Sur la figure 3, l'opérateur peut voir que :
- le porteur 100 n'a pas changé de cap (les symboles de porteur 0' sont alignés sur le cap actuel du porteur) ;
- l'angle de gisement du mobile 102 est constant (les deuxièmes symboles de mobile 2' sont alignés avec le premier symbole de mobile 2), c'est-à-dire que le défilement du mobile 102 est nul, de sorte qu'il représente un risque élevé de collision ;
- le mobile 101 a un défilement inférieur à 0 (les deuxièmes symboles de mobile 1' sont alignés sur une direction qui forme un angle non nul avec la direction du premier symbole de mobile 1 par rapport au porteur) de sorte que le mobile 101 n'est pas dangereux ;
- le mobile 103 a un défilement dont le signe a changé (les deuxièmes symboles de mobile 3' les plus récents ne sont pas alignés avec les autres deuxièmes symboles de mobile 3' alors même que le cap du porteur 100 n'a pas changé) de sorte que le mobile 103 présente un risque potentiel de collision si son cap devait à nouveau changer.

L'unité informatique 1011 exécute enfin :
- une étape d'alerte de premier niveau lorsque le défilement d'au moins un des mobiles 101, 102, 103 est nul et que le porteur n'a pas changé de cap;
- une étape d'alerte de deuxième niveau lorsque le défilement d'au moins un des mobiles 101, 102, 103 change de signe alors même que le porteur 100 n'a pas changé de cap.

L'alerte peut être visuelle : changement de couleur, clignotement ou autre. L'alerte peut être auditive : sonnerie ou message vocal par exemple.

L'unité informatique 1011 peut aussi émettre une alerte de fiabilité des calculs de position de croisement la plus proche lorsque sont détectés des changements de signe du défilement des mobiles ou du porteur.

Bien entendu, l'invention n'est pas limitée au mode de réalisation décrit mais englobe toute variante entrant dans le champ de l'invention telle que définie par les revendications.

En particulier, l'invention est applicable à tout type de porteur nautique, aérien ou terrestre. Lorsque le porteur est un aéronef, le bus de données auquel est raccordée l'unité informatique est le bus de données aéronautiques. Dans le domaine aérien, la durée de surveillance prédéterminée sera par exemple de 3 minutes, voire 1 minute.

On notera que le deuxième symbole de mobile peut représenter soit l'angle de gisement du mobile par rapport au porteur comme dans l'exemple décrit soit le cap suivi par le mobile. Dans ce dernier cas, il n'est pas obligatoire de disposer des symboles de porteur dans la bande annulaire pour représenter des changements de cap du porteur puisque la variation de cap des mobiles est indépendante des variations de cap du porteur.

## Revendications

1. Procédé de surveillance d'une région (R) dans laquelle se trouve un porteur (100), comprenant les étapes de :
- détecter, au moyen d'au moins un capteur de premier type (1001), des positions successives d'un mobile (101, 102, 103) suivant une trajectoire dans ladite région (R) ;
- afficher une représentation polaire (10) ayant un centre symbolisant la position actuelle du porteur (100) et y placer un premier symbole de mobile (1, 2, 3) représentant une position actuelle du mobile (101, 102, 103) en fonction d'un angle de gisement et d'une distance du mobile (101, 102, 103) par rapport au porteur (100) ;
**caractérisé en ce que** le procédé comprend les étapes de :
- afficher autour de la représentation polaire (10) une bande annulaire (20) dont la largeur (1) représente une durée de surveillance prédéterminée ;
- placer dans la bande annulaire (20) des deuxièmes symboles de mobile (1', 2', 3') représentatif de données angulaires successives de la trajectoire dudit mobile (101, 102, 103), la bande annulaire (20) et la représentation polaire (10) ayant une même référence angulaire, la bande annulaire (20) ayant un pourtour intérieur (21) correspondant à un temps récent et un pourtour extérieur (22) correspondant à un temps passé par rapport au temps récent d'une durée égale à la durée de surveillance prédéterminée et les deuxièmes symboles de mobile (1', 2', 3') étant placés d'autant plus près du pourtour extérieur (22) de la bande annulaire (20) que la donnée angulaire correspondante est ancienne.

2. Procédé selon la revendication 1, dans lequel la donnée angulaire est un angle de gisement du mobile (101, 102, 103) par rapport au porteur (100).

3. Procédé selon la revendication 1, dans lequel la donnée angulaire est un azimut du mobile (101, 102, 103).

4. Procédé selon l'une quelconque des revendications précédentes, dans lequel des symboles de porteur (0') représentant les positions successives du porteur (100) pendant la durée de surveillance prédéterminée sont placés dans la bande annulaire (20) pour mettre en évidence une variation d'azimut du porteur (100) pendant la durée de surveillance prédéterminée, les symboles de porteur (0') étant placés d'autant plus près du pourtour extérieur (22) de la bande annulaire (20) que la position correspondante est ancienne.

5. Procédé selon l'une quelconque des revendications précédentes, dans lequel la position du mobile (101, 102, 103) est également détectée par au moins un capteur de deuxième type (1002), le capteur de premier type (1001) déterminant la position du mobile dans un premier repère et le capteur de deuxième type (1002) déterminant la position du mobile dans un deuxième repère, le procédé comprenant l'étape de normaliser le premier repère et le deuxième repère, la position du mobile (101, 102, 103) utilisée pour positionner le premier symbole de mobile (1, 2, 3) et le deuxième symbole de mobile (1', 2', 3') résultant d'une combinaison des positions détectées par les deux capteurs.

6. Procédé selon la revendication précédente, dans lequel la position du mobile est détectée également par un capteur de troisième type (1003).

7. Procédé selon la revendication 6, dans lequel le mobile est détecté au moyen d'un capteur radar (1001), d'un capteur AIS (1002) et d'un capteur optique (1003).

8. Procédé selon l'une quelconque des revendications 1 à 4, dans lequel le mobile est détecté par un capteur optique (1003).

9. Procédé selon la revendication 8, dans lequel le pourtour intérieur (21) de la bande annulaire (20) est placé à une distance du centre de la représentation polaire (10) correspondant, dans la représentation polaire, à un horizon optique du capteur optique.

10. Procédé selon l'une quelconque des revendications précédentes, comprenant une étape d'alerte de premier niveau lorsque le défilement du mobile (101, 102, 103) est nul.

11. Procédé selon la revendication 10, comprenant une étape d'alerte de deuxième niveau lorsque le défilement du mobile (101, 102, 103) change de signe.

12. Dispositif (1010) de surveillance d'une région (R) dans laquelle se trouve un porteur (100) du dispositif (1010), comprenant une unité informatique (1011) de traitement de données qui est reliée à un afficheur (1012) et à un bus de données (1005) transportant des données positionnelles de mobiles (101, 102, 103) se trouvant dans la région (R) du porteur (100), l'unité informatique (1011) étant programmée pour mettre en oeuvre le procédé selon l'une quelconque des revendications précédentes.

13. Dispositif selon la revendication 12, dans lequel le porteur (100) est un navire comportant un bus de type NMEA formant le bus de données (1005) auquel l'unité informatique (1011) est raccordée.

14. Dispositif selon la revendication 12, dans lequel le porteur (100) est un aéronef et le bus de données (1005) est le bus de données aéronautiques.

## Patentansprüche

1. Verfahren zur Überwachung einer Region (R), in welcher sich ein Träger (100) befindet, umfassend die Schritte, dass
- mittels zumindest eines Sensors ersten Typs (1001) aufeinanderfolgende Positionen eines mobilen Objekts (101, 102, 103) erfasst werden, das einen Kurs innerhalb der Region (R) verfolgt;
- eine Polardarstellung (10) mit einem die aktuelle Position des Trägers (100) symbolisierenden Zentrum angezeigt wird, und dass ein erstes Mobilobjekt-Symbol (1, 2, 3) darin platziert wird, das jeweils eine aktuelle Position des mobilen Objekts (101, 102, 103) in Abhängigkeit zu einem Peilwinkel und zu einer Entfernung des mobilen Objekts (101, 102, 103) in Bezug auf den Träger (100) darstellt;
**dadurch gekennzeichnet, dass** das Verfahren die Schritte umfasst, dass:
- um die Polardarstellung (10) herum ein ringförmiger Streifen (20) angezeigt wird, dessen Breite (1) eine vorbestimmte Überwachungsdauer darstellt;
- in dem ringförmigen Streifen (20) jeweils zweite Mobilobjekt-Symbole (1', 2', 3') platziert werden, die aufeinanderfolgende Winkelangaben des Kurses des betreffenden mobilen Objekts (101, 102, 103) darstellen, wobei der ringförmige Streifen (20) und die Polardarstellung (10) denselben Winkelbezugspunkt haben, wobei der ringförmige Streifen (20) einen Innenrand (21) aufweist, der einem rezenten Zeitpunkt entspricht, und einen Außenrand (22) aufweist, der einem Zeitpunkt entspricht, welcher in Bezug auf den rezenten Zeitpunkt um eine Zeitspanne zurückliegt, die der vorbestimmten Überwachungsdauer entspricht, und wobei die zweiten Mobilobjekt-Symbole (1', 2', 3') umso näher am Außenrand (22) des ringförmigen Streifens (20) angeordnet sind, je älter die betreffende Winkelangabe ist.

2. Verfahren nach Anspruch 1, wobei es sich bei der Winkelangabe um einen Peilwinkel des mobilen Objekts (101, 102, 103) in Bezug auf den Träger (100) handelt.

3. Verfahren nach Anspruch 1, wobei es sich bei der Winkelangabe um ein Azimut des mobilen Objekts (101, 102, 103) handelt.

4. Verfahren nach einem der vorhergehenden Ansprüche, wobei Träger-Symbole (0'), welche die aufeinanderfolgenden Positionen des Trägers (100) während der vorbestimmten Überwachungsdauer darstellen, in dem ringförmigen Streifen (20) platziert werden, um eine Azimut-Veränderung des Trägers (100) während der vorbestimmten Überwachungsdauer anzuzeigen, wobei die Träger-Symbole (0') umso näher am Außenrand (22) des ringförmigen Streifens (20) angeordnet sind, je älter die betreffende Position ist.

5. Verfahren, nach einem der vorhergehenden Ansprüche, wobei die Position des mobilen Objekts (101, 102, 103) auch von zumindest einem Sensor zweiten Typs (1002) erfasst wird, wobei der Sensor ersten Typs (1001) die Position des mobilen Objekts in einem ersten Koordinatensystem ermittelt, und der Sensor zweiten Typs (1002) die Position des mobilen Objekts in einem zweiten Koordinatensystem ermittelt, wobei das Verfahren die Schritte umfasst, dass das erste Koordinatensystem und das zweite Koordinatensystem in Bezug zueinander normalisiert werden, wobei sich die Position des mobilen Objekts (101, 102, 103), die zur Positionierung des ersten Mobilobjekt-Symbols (1, 2, 3) und des zweiten Mobilobjekt-Symbols (1', 2', 3') diente, aus einer Kombination der von den beiden Sensoren erfassten Positionen ergibt.

6. Verfahren nach dem vorhergehenden Anspruch, wobei die Position des mobilen Objekts auch von einem Sensor dritten Typs (1003) erfasst wird.

7. Verfahren nach Anspruch 6, wobei das mobile Objekt mittels eines Radarsensors (1001), eines AlS-Sensors (1002) und eines optischen Sensors (1003) erfasst wird.

8. Verfahren nach einem der Ansprüche 1 bis 4, wobei das mobile Objekt von einem optischen Sensor (1003) erfasst wird.

9. Verfahren nach Anspruch 8, wobei der Innenrand (21) des ringförmigen Streifens (20) in einem Abstand zum Zentrum der Polardarstellung (10) platziert wird, welcher in der Polardarstellung einem optischen Horizont des optischen Sensors entspricht.

10. Verfahren nach einem der vorhergehenden Ansprüche, umfassend einen Schritt der Warnung der ersten Stufe, wenn die Ablenkung des mobilen Objekts (101, 102, 103) gleich null ist.

11. Verfahren nach Anspruch 10, umfassend einen Schritt der Warnung der zweiten Stufe, wenn die Ablenkung des mobilen Objekts (101, 102, 103) ihr Vorzeichen ändert.

12. Vorrichtung (1010) zur Überwachung einer Region (R), in welcher sich ein Träger (100) der Vorrichtung (1010) befindet, umfassend eine Computereinheit (1011) zur Datenverarbeitung, die mit einer Anzeige (1012) und mit einem Datenbus (1005) zum Transport von Positionsdaten von mobilen Objekten (101, 102, 103) verbunden ist, welche sich in der Region (R) des Trägers (100) befinden, wobei die Computereinheit (1011) derart programmiert ist, dass sie das Verfahren nach einem der vorhergehenden Ansprüche ausführt.

13. Vorrichtung nach Anspruch 12, wobei es sich bei dem Träger (100) um ein Schiff mit einem NMEA-Bus handelt, welcher den Datenbus (1005) bildet, an dem die Computereinheit (1011) angeschlossen ist.

14. Vorrichtung nach Anspruch 12, wobei es sich bei dem Träger (100) um ein Luftfahrzeug und bei dem Datenbus (1005) um den Luftfahrtdatenbus handelt.

## Claims

1. A method of monitoring a region (R) in which a carrier (100) is located, the method comprising the steps of:
· using at least one sensor (1001) of a first type to detect successive positions of a moving body (101, 102, 103) following a path in said region (R); and
· displaying a polar plot (10) having a center symbolizing the current position of the carrier (100) and having placing thereon a first moving-body symbol (1, 2, 3) representing the current position of the moving body (101, 102, 103) as a function of the bearing angle and of the distance of the moving body (101, 102, 103) relative to the carrier (100);
the method being **characterized in that** it further comprises the steps of:
· displaying an annular band (20) around the polar plot (10), the band being of width (ℓ) that represents a predetermined monitoring duration; and
· placing second moving-body symbols (1', 2', 3') in the annular band (20), the second symbols being representative of successive readings of angles along the path of said moving body (101, 102, 103), the annular band (20) having an inner outline (21) corresponding to a recent time and an outer outline (22) corresponding to a past time preceding the recent time by a duration equal to the predetermined monitoring duration, and the second moving-body symbols (1', 2', 3') being placed closer to the outer outline (22) of the annular band (20) with increasing age of the corresponding angle readings.

2. A method according to claim 1, wherein the angle readings are bearing angles of the moving body (101, 102, 103) relative to the carrier (100).

3. A method according to claim 1, wherein the angle readings are azimuths of the moving body (101, 102, 103).

4. A method according to any preceding claim, wherein carrier symbols (0') representing successive positions of the carrier (100) during the predetermined monitoring duration are placed in the annular band (20) in order to show any variation in the azimuth of the carrier (100) during the predetermined monitoring duration, the carrier symbols (0') being placed closer to the outer outline (22) of the annular band (20) with increasing age of the corresponding position.

5. A method according to any preceding claim, wherein the positions of the moving body (101, 102, 103) are also detected by at least one sensor (1002) of a second type, the sensor (1001) of the first type determining the position of the moving body in a first reference frame and the sensor (1002) of the second type determining the position of the moving body in a second reference frame, the method including the step of normalizing the first and second reference frames, with the positions of the moving body (101, 102, 103) that are used for positioning the first and second moving-body symbols (1, 2, 3; 1', 2', 3') resulting from a combination of the positions detected by both sensors.

6. A method according to the preceding claim, wherein the positions of the moving body are also detected by a sensor (1003) of a third type.

7. A method according to claim 6, wherein the moving body is detected by means of a radar sensor (1001), by means of an AIS sensor (1002), and by means of an optical sensor (1003).

8. A method according to any one of claims 1 to 4, wherein the moving body is detected by an optical sensor (1003).

9. A method according to claim 8, wherein the inner outline (21) of the annular band (20) is placed at a distance from the center of the polar plot (10) that corresponds, in the polar plot, to the optical horizon of the optical sensor.

10. A method according to any preceding claim, including a first level warning step when the transverse movement of the moving body (101, 102, 103) is zero.

11. A method according to claim 10, including a second level warning step when the transverse movement of the moving body (101, 102, 103) changes sign.

12. A device (1010) for monitoring a region (R) in which a carrier (100) of the device (1010) is located, the device comprising a computer unit (1011) for processing data, which unit is connected to a display unit (1012) and to a data bus (1005) conveying position data of moving bodies (101, 102, 103) that are located in the region (R) of the carrier (100), the computer unit (1011) being programmed to perform the method according to any preceding claim.

13. A device according to claim 12, wherein the carrier (100) is a ship including an NMEA type bus forming the data bus (1005) to which the computer unit (1011) is connected.

14. A device according to claim 12, wherein the carrier (100) is an aircraft, and the data bus (1005) is an aviation data bus.
